# EUROPEAN PATENT APPLICATION

(11) **EP 4 793 943 A1**
(43) Date of publication of application: **19.08.2026**
(21) Application number: 25158490.0
(22) Date of filing: 18.02.2025
(51) Int. Cl.: G10L 17/18, G10L 17/04, G10L 13/00

(54) **AUDIO EMBEDDINGS USING MACHINE-LEARNING**

(71) Applicant: GDM Holding LLC, Mountain View CA 94043 (US)
(72) Inventor: AGOSTINELLI, Andrea, Zurich (CH)
(74) Representative: Varley, James Richard

(57) **Abstract**

Computer implemented method comprising: obtaining an audio stem sample, wherein the audio stem sample comprises audio originating from one or more sources of a particular type in an audio sample; and generating, using a machine-learning embedding model, an embedding of the audio stem sample in an embedding space. Computer implemented method comprising: obtaining an embedding of an audio stem sample, wherein the audio stem sample comprises audio originating from one or more sources of a particular type in an audio sample, inputting the embedding of the audio stem sample into a machine-learning generative model; and generating, by the machine-learning generative model and conditioned on the embedding of the audio stem sample, output audio data comprising an output audio stem, wherein the output audio stem has one or more audio properties in common with the audio stem sample.

## Description

### BACKGROUND

This specification relates to processing data using machine learning models.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a non-linear transformation to a received input to generate an output.

### SUMMARY

This specification describes at least the use of machine-learning embedding models to generate embeddings of audio stem samples (e.g., vocal samples) for use in downstream audio processing/generation tasks. An audio stem sample, e.g., a predefined duration of audio data from an audio stem of a set of audio data, is input into the machine-learning embedding model, which processes it to generate an embedding, e.g., a low-dimensional representation of characteristics of the audio stem sample. The machine-learning model is, in some examples, trained using self-supervised learning based on sets of training data generated from audio data containing multiple audio stems, e.g., musical audio data.

The embedding of the audio stem sample can be used for one or more downstream audio tasks. For example, the embedding can be used to identify/validate the identity of voices in an audio sample. Alternatively or additionally, the audio stem sample can be used to condition a generative model to generate audio data that has the characteristics of the audio stem sample, e.g., has a singer with the same vocal style and/or has music in the same instrumental style.

According to a first aspect of this specification, there is described a computer implemented method comprising: obtaining an audio stem sample, wherein the audio stem sample comprises audio originating from one or more sources of a particular type in an audio sample; and generating, using a machine-learning embedding model, an embedding of the audio stem sample in an embedding space.

The method may include one or more of the following features, either alone or in combination.

The one or more sources of a particular type in the audio sample may be vocal sources. The method may further comprise: comparing the embedding of the vocal audio stem to an embedding of a reference vocal audio stem sample that includes one or more target speakers; and determining that the audio stem sample corresponds to one or more of the target speakers based on the comparison. Comparing the embedding of the vocal audio stem to the embedding of a reference vocal audio stem sample that includes one or more target speakers may comprise: determining a distance in the embedding space between the embedding of the audio stem sample and an embedding of a reference audio stem sample. Determining that the audio stem sample corresponds to one or more of the target speakers based on the comparison may comprise: determining that the distance in the embedding space between the embedding of the audio stem sample and the embedding of the reference audio stem sample is below a threshold value.

The method may further comprise: inputting the embedding of the audio stem sample into a machine-learning generative model; and generating, by the machine-learning generative model and conditioned on the embedding of the audio stem sample, output audio data comprising an output audio stem, wherein the output audio stem has one or more audio properties in common with the audio stem sample.

The method may further comprise: inputting a natural language input into the machine-learning generative model, the natural language input describing one or more target properties of the output audio data. Generating, by the machine-learning generative model, the output audio data comprising an output audio stem may be further conditioned on the natural language input.

Generating, by the machine-learning generative model, output audio data may comprise an output audio stem comprises, at each of a plurality of iterations: inputting an embedding of an audio stem sample for the iteration into the machine-learning generative model, wherein the audio stem sample for the iteration comprises the audio stem sample and/or a further audio stem sample; and generating, by the machine-learning generative model and conditioned on the embedding of the audio stem sample for the iteration, a section of the output audio data, wherein the section of output audio data for an iteration is temporally subsequent to a section of output audio data of the previous iteration.

The output audio data may comprise a music sample. The output audio stem may be a vocal audio stem.

According to a further aspect of this specification, there is described a computer implemented method comprising: obtaining an embedding of an audio stem sample, wherein the audio stem sample comprises audio originating from one or more sources of a particular type in an audio sample inputting the embedding of the audio stem sample into a machine-learning generative model; and generating, by the machine-learning generative model and conditioned on the embedding of the audio stem sample, output audio data comprising an output audio stem, wherein the output audio stem has one or more audio properties in common with the audio stem sample.

According to a further aspect of this specification, there is described a computer implemented method, comprising: for a plurality of training examples, each training example comprising a first audio stem sample and a second audio stem sample: generating, using the machine-learning embedding model and based on the first audio stem sample, a first embedding of the first audio stem sample in an embedding space; generating, using the machine-learning embedding model and based on the second audio stem sample, a second embedding of the second audio stem sample in an embedding space; and comparing the first embedding to the second embedding using a contrastive objective function. If the first audio stem sample and the second audio stem sample originate from the same source, the contrastive objective function penalizes a difference between the first embedding and the second embedding. If the first audio stem sample and the second audio stem sample originate from different sources, the contrastive objective function rewards a difference between the first embedding and the second embedding. The method further comprises updating parameters of the machine-learning embedding model based on the comparisons of the first embeddings to the second embeddings.

The method may include one or more of the following features, either alone or in combination.

The method may further comprise generating a training dataset comprising the training examples, wherein generating the training dataset comprises: extracting an audio stem from the audio sample, the audio stem comprising audio originating from one or more sources of a particular type in the audio sample; segmenting the audio stem into a plurality of frames; generating one or more positive pairs of frames from the audio stem, wherein a positive pair comprises a first frame comprising audio originating from a source and a second frame comprising audio data originating from the same source; and including the one or more positive pairs of frames in a training dataset of positive pairs.

The machine-learning embedding model may comprise one or more transformer layers.

The first audio stem sample and second audio stem sample for a training example may originate from one or more vocal sources. The first audio stem sample and the second audio stem sample for a training example may originate from one or more music audio samples. Each music audio sample may comprise a vocal stem. The first audio stem sample and the second audio stem sample for a training example may each have a predefined duration.

According to a further aspect of this specification, there is described a computer implemented method for generating a training dataset for training a machine-learning embedding model to generate embeddings of audio stem samples, the method comprising, for each of one or more audio samples: extracting an audio stem from the audio sample, the audio stem comprising audio originating from one or more sources of a particular type in the audio sample; segmenting the audio stem into a plurality of frames; generating one or more positive pairs of frames from the audio stem, wherein a positive pair comprises a first frame comprising audio originating from a source and a second frame comprising audio data originating from the same source; and including the one or more positive pairs of frames in a training dataset of positive pairs.

The method may include one or more of the following features, either alone or in combination.

The one or more sources of a particular type in the audio sample may be vocal sources. The first audio frame and second audio frame of a positive pair may comprise vocal data originating from the same person.

The method may further comprise: augmenting the one or more positive pairs of frames using one or more audio transformations to generate one or more augmented pairs of frames; and including the one or more augmented positive pairs of frames in a training dataset of positive pairs. The one or more audio transformations may comprise one or more of: tempo augmentation; pitch augmentation; noise augmentation; and/or reverse audio augmentation.

Generating one or more positive pairs of frames in the audio stem may comprise: filtering the plurality of frames in the audio stem based on respective energy levels of audio data in the plurality of frames in the audio stem to generate a filtered set of frames of the audio stem; and generating the one or more positive pairs of frames in the audio stem from the filtered set of frames of the audio stem.

The method may further comprise: training, using the training dataset, a machine-learning embedding model to generate embeddings of a frame of audio data, wherein the training comprises using a contrastive loss that rewards embeddings of frames from positive pairs of frames being close in an embedding space and penalizes embeddings from frames of different sources being close in the embedding space.

According to a further aspect of this specification, there is described computer program products comprising computer readable instructions that, when executed by a computer, cause the computer to perform operations comprising any one or more of the methods described herein.

According to a further aspect of this specification, there are described systems comprising one or more processors and a memory, the memory storing computer readable instructions that, when execute by the one or more processors, cause the system to perform operations comprising any one or more of the methods described herein. Particular embodiments of the subject matter described in this specification can be implemented so as to realize one or more of the following advantages.

The use of the machine-learning embedding models described herein can provide compact representation of audio stem samples that can be used for downstream tasks, such as audio validation and/or audio generation. The embeddings generated using the techniques described herein can result in improved performance on downstream tasks (e.g., more accurate vocal classification and/or higher quality audio generation) that other embedding methods.

In particular, the use of such models for generating embeddings of voice samples can be used for conditioning generative audio models to generate music that contains vocal data in the style of voice in the audio stem sample. By conditioning the generative model on different embeddings at different points in time, fine control over the generative output audio can be achieved, for example, allowing generation of music that has multiple singers.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 shows an overview of an example method for generating embeddings of audio stem samples using a machine-learning model.
FIG. 2 shows an overview of an example method for verifying speakers in an audio sample based on embeddings of audio stem samples.
FIG. 3 shows an overview of an example method for generating audio data based on an embedding of an audio stem samples.
FIG. 4 shows an overview of an example method for training a machine-learning model to generate embeddings of audio stem samples.
FIG. 5 shows an overview of an example method for generating a training dataset for training a machine-learning model to generate embeddings of audio stem samples.
FIG. 6 shows a flow diagram of an example method of generating embeddings of audio stem samples using a machine-learning model.
FIG. 7 shows a flow diagram of an example method of verifying speakers in an audio sample based on embeddings of audio stem samples.
FIG. 8 shows a flow diagram of an example method of generating audio data based on an embedding of an audio stem samples.
FIG. 9 shows a flow diagram of an example method of training a machine-learning model to generate embeddings of audio stem samples.
FIG. 10 shows a flow diagram of an example method of generating a training dataset for training a machine-learning model to generate embeddings of audio stem samples.
FIG. 11 shows a schematic example of a system/apparatus 1100 for performing any of the methods described herein.

Like reference numbers and designations in the various drawings indicate like elements.

### DETAILED DESCRIPTION

This specification describes the generation and use of embeddings of audio stem samples. Embeddings of audio stem samples (e.g., frames of an audio stem with a predefined duration) are generated using a machine-learning embedding model, e.g., a model that has been trained using a contrastive loss. Such embeddings can be used for one or more downstream audio processing tasks, such as speaker/singer identification/verification and/or audio generation (e.g., music generation with vocals from a target singer).

Methods of training such machine-learning generative models, and of generating training datasets on which such training can be performed, are also described.

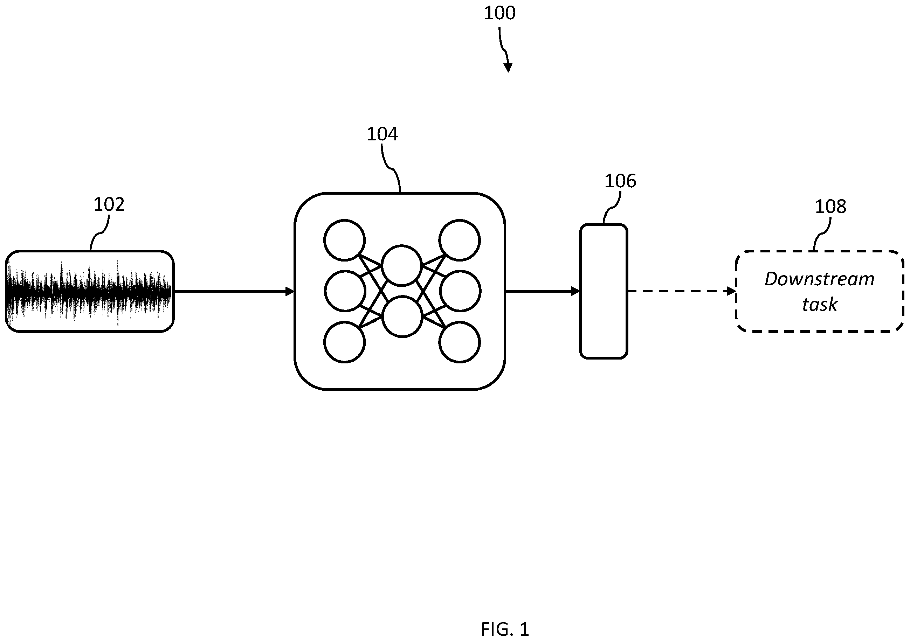

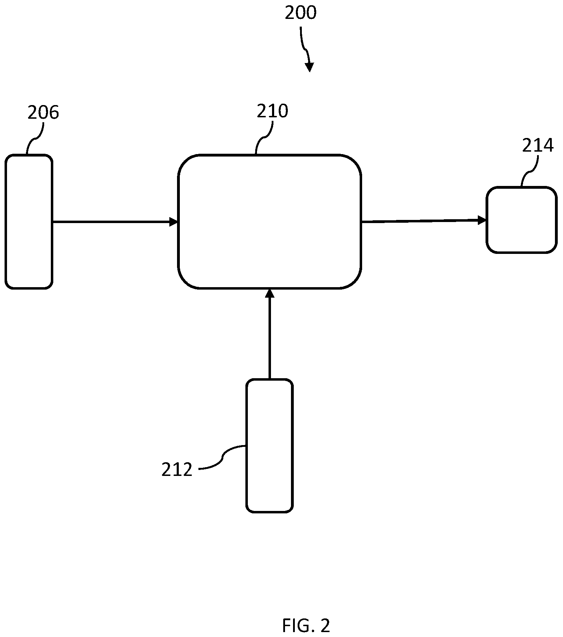

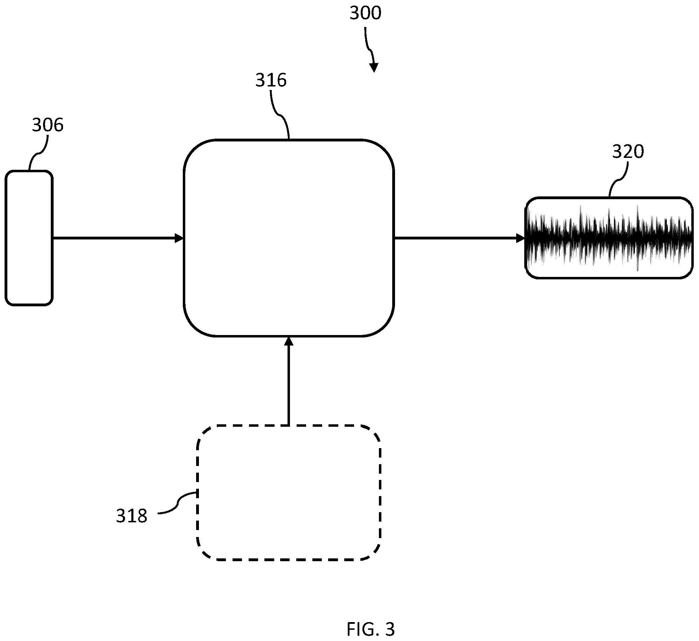

FIG. 1 shows an overview of an example method 100 for generating embeddings of audio stem samples using a machine-learning model. An audio stem sample 102 is input into a machine-learning model 104, which processes the input audio stem sample to generate an embedding 106 of the audio stem sample in an embedding space. The embedding 106 may be used for one or more downstream tasks 108, e.g., the tasks described in relation to FIGs. 2 and 3.

An audio stem is a group of one or more audio sources of audio in a set of audio data, i.e., the audio in the audio data that originates from the same source (or sources) can be grouped into a single audio stem. As an example, a vocal stem in a set of audio data comprises a subset of the audio data that originates from one or more speakers/singers. As further example, an audio stem can comprise a subset of the audio data that corresponds to audio originating from a particular instrument (e.g., a guitar, a harp, a piano, etc.) and/or a particular instrument type (e.g., strings, woodwind, brass, percussion, etc.).

An audio stem sample 102 comprises a subsection of an audio stem, e.g., a frame of audio data from the audio stem that has predefined length. For example, the audio stem sample 102 may comprise a frame of audio data with a length of between 2 seconds and 30 seconds, such as a four second frame.

The audio stem sample 102 may be extracted from an input audio sample/input audio stem. For example, a user may supply an example of the user voice speaking/singing, e.g., via a microphone associated with a user device or from a stored example of the user voice. As another example, the user may supply an example section of music. The audio stem sample can be extracted from this input audio data, e.g., using a stem extraction tool/method, followed by cropping the extracted stem to the predefined length. If the input audio sample is already an audio stem, the audio sample is cropped to the predefined length to generate the audio stem sample 102.

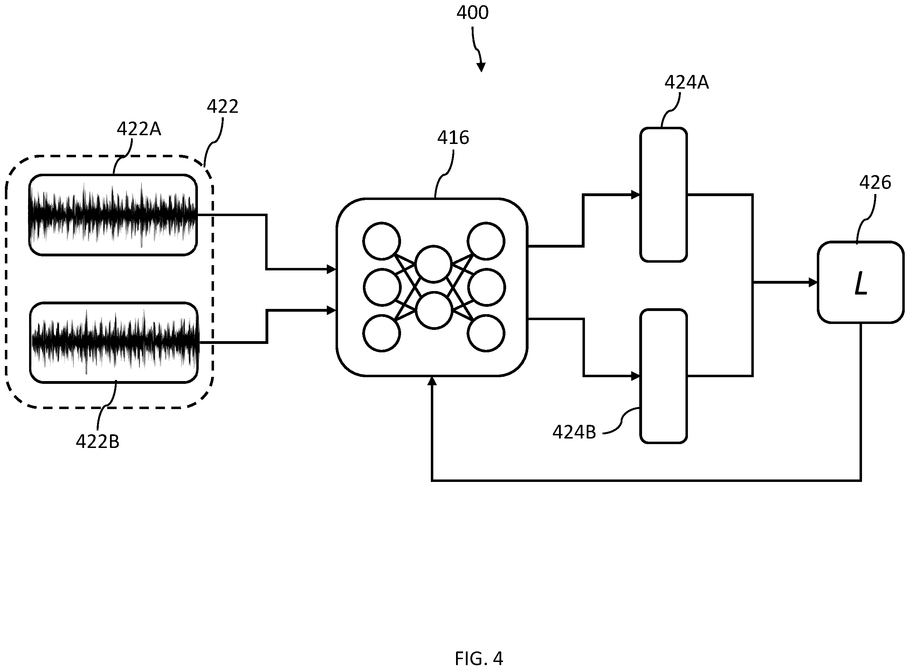

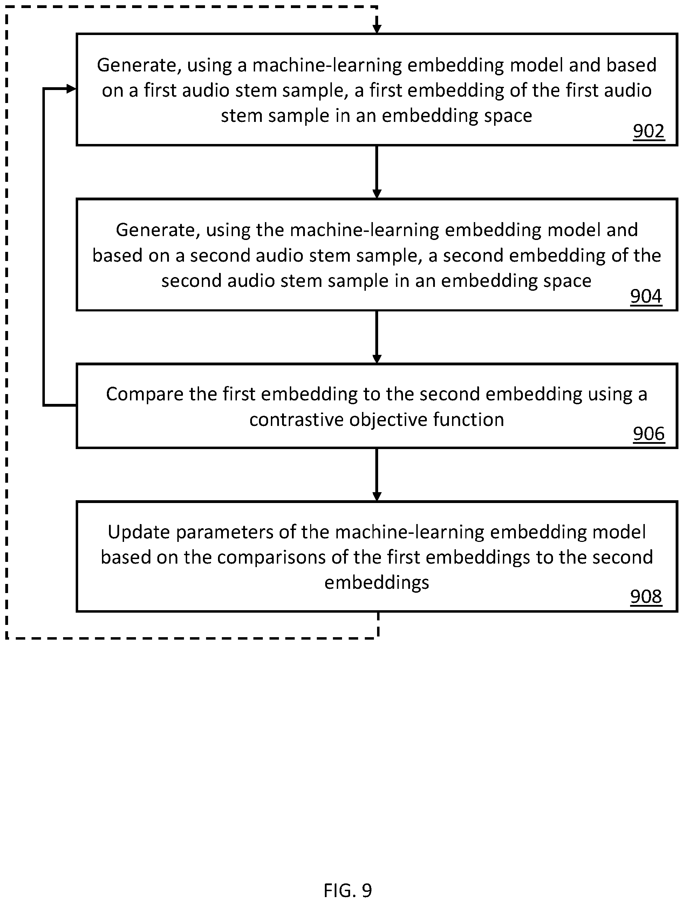

The machine-learning embedding model 104 takes as input an audio stem sample 102 and processes the audio stem sample 102 based on learned parameter values to generate an embedding 106 of the audio stem sample 102. The machine-learning model 104 has, in some examples, been trained using an unsupervised training method, e.g., any of the methods described in relation to FIGs. 4 and/or 9.

The machine-learning embedding model 104 is, in some examples, a neural network model. The machine-learning embedding model 104 may comprise one or more self-attention layers, e.g., be a transformer model. The machine-learning embedding model 104 may comprise one or more convolutional layers. The machine-learning embedding model 104 may comprise one or more fully connected layers. In some examples, the machine-learning embedding model 104 has an architecture that is based on a vision transformer (ViT) model.

The embedding 106 of the audio stem sample is a lower-dimensional representation of the audio stem sample 102 in an embedding space. The embedding 106 of the audio stem sample is, for example, an N-dimensional vector in the embedding space, where *N* is the dimension of the embedding space, e.g., the embedding vector is an element of ${ℝ}^{N}$. *N* may be between 128 and 512, e.g., 192. The embedding 106 forms a compact representation of properties of the input audio stem sample 102.

The embedding can be used for one or more downstream audio processing tasks 108, e.g., the tasks described in relation to FIGs. 2-3 and 7-8. Other examples of downstream audio tasks include, but are not limited to audio classification, such as genre classification, speaker classification, language identification, mood identification and/or the like.

FIG. 2 shows an overview of an example method 200 for verifying speakers in an audio sample based on embeddings of audio stem samples. An embedding 206 of an audio stem sample that includes vocal samples from one or more speakers is obtained and compared 210 to a reference embedding 212 of a reference audio stem sample that includes one or more target speakers. Based on the comparison 210, a determination 214 of whether the audio stem sample includes one or more of the target speakers is made.

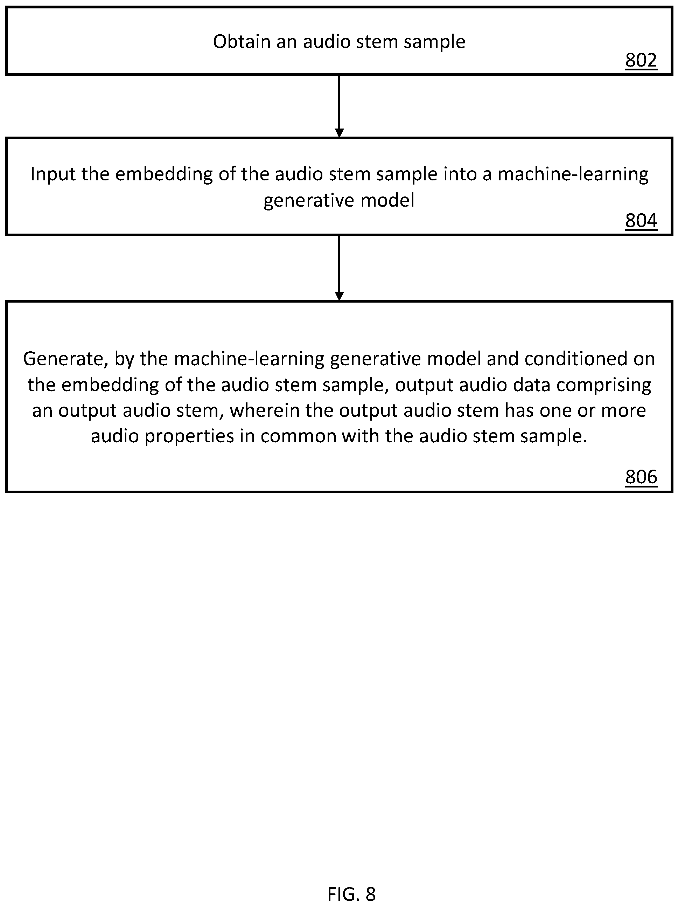

The embedding 206 of the audio stem sample can be generated from a set of audio data using, for example, the method described in relation to FIG. 1. The audio stem sample may originate from audio data input by a user, e.g., via a microphone of a user device. Alternatively, the audio stem sample may originate from a generative model, e.g., as described in relation to FIGs. 3 and 8.

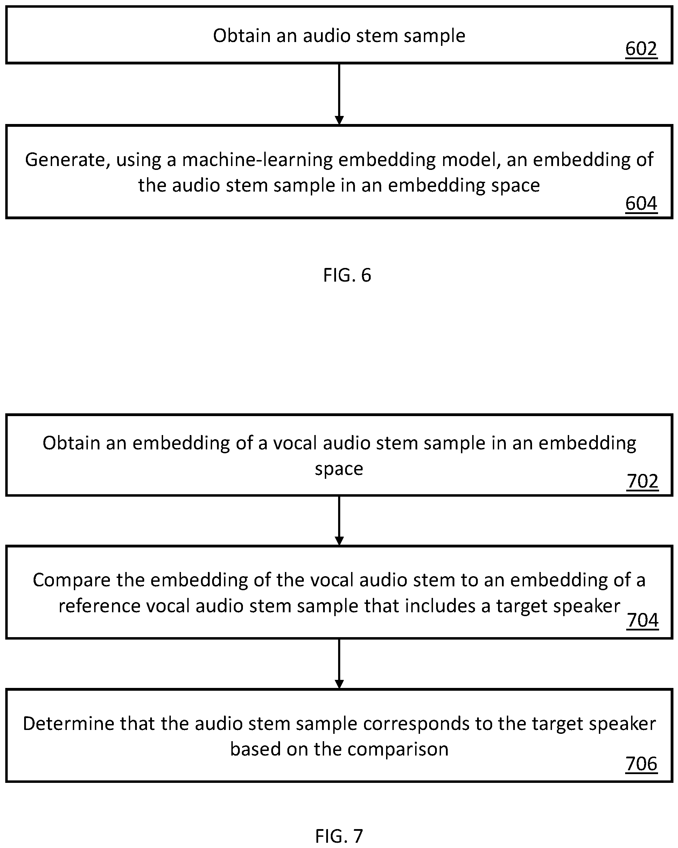

The reference embedding 212 is an embedding of an audio stem sample of a target voice. The reference embedding 212 was generated from a sample of the target voice using any of the methods described in relation to FIGs. 1 and/or 6. The reference embedding 212 may be retrieved from a set of stored reference embeddings in dependence on a target voice identity. Alternatively, the reference embedding 212 may be generated from an input voice sample obtained from one or more users.

The embedding 206 is compared to the reference embedding 212 using a comparison method 210. In some examples, the comparison method comprises determining a distance between the embedding 206 and the reference embedding 212 in embedding space using a metric, e.g., an L1, L2 or cosine similarity metric. If the distance in embedding space is below a threshold value, the method 200 determines 214 that the embedding 206 corresponds to an audio sample from the same speaker as the reference embedding 212.

Alternatively, the determination 214 may be based on using a machine-learning classification model that takes as input the embedding 206 and the reference embedding 212, and processes then to determine a score (e.g., a probability) indicative of a likelihood that the embedding 206 and the reference embedding 212 originate from the same speaker.

The method 200 may be used for quality control of generative audio content, e.g., to verify whether generative audio content contains vocal audio that corresponds to a target speaker, and/or to verify that generative audio content does not contain vocal audio that corresponds to a particular speaker.

FIG. 3 shows an overview of an example method 300 for generating audio data based on an embedding of an audio stem samples. An embedding 306 of an audio stem sample and input into a machine-learning generative model 316. In some examples, additional conditioning data 318 is also input onto the machine-learning generative model 316. The machine-learning generative model 316 processes the input data to generate a set of output audio data 320 that shares one or more properties with the audio stem sample from which the input embedding 306 was derived.

The embedding 306 of the audio stem sample 306 can be generated from a set of audio data using, for example, the method described in relation to FIG. 1. Alternatively or additionally, the audio stem sample can be retrieved from a set of audio stem samples (e.g., pre-generated audio stem samples) based on a user input to a device. For example, a user can select a vocal sample from a set of vocal samples, each of which corresponds to a stored embedding of an audio stem sample, for use in generating the generative output 320.

In some examples, the embedding 306 of the audio stem sample undergoes residual vector quantization (RVQ) prior to input to the machine-learning generative model 316.

In some examples, the embedding 306 of the audio stem sample can be generated from an input audio sample using a k-means clustering method. An audio stem is extracted from an input audio, e.g., using MDX-based vocal extraction. The audio stem is divided into a plurality of audio stem samples of a predefined length, and an embedding generated for each audio stem sample (optionally after filtering out the silence in the audio stem). A k-means clustering algorithm is applied to the plurality of embeddings to generate *k* embeddings from the audio sample. *k* may be in the range [1, 10], e.g., 3, 5 or 7. The use of such *k*-means embeddings can provide coverage of the full audio while keeping the fidelity of the conditioning high. Furthermore, the use of *k*-means clustering can provide flexibility for which audio input to use, since a variable input audio length can be used for the voice style, ad multiple embeddings will be clustered to a fixed number of centroids.

The embedding 306 of the audio stem sample is input into a machine-learning generative model 316. The machine-learning generative model 316 is a generative model that has been trained to generate audio data conditioned on/based on an input audio stem sample 306. The machine-learning generative model 316 may be a neural network model. The machine-learning generative model 316 may comprise one or more self-attention layers. The machine-learning generative model 316 may comprise one or more convolutional layers.

Examples of such generative models include, for example, generative adversarial models, convolution neural network models (e.g., WaveNet), diffusion-based models, and/or self-attention-based models (e.g., MusicLM).

In some examples, the machine-learning embedding model can receive as input one or more (e.g., plurality) of embeddings 306. Each embedding may condition a different aspect of the output audio 320, e.g., one embedding may control a vocal aspect of the output audio 320, while another embedding may control an instrumental aspect of the output audio 320.

The machine-learning generative model 316 processes the input embedding 306 to generate output audio 320 that shares one or more audio properties with the audio stem sample corresponding to the input embedding 306. For example, where the audio stem sample is a vocal sample, e.g., a singer, the output audio 320 comprises vocal audio with the same voice as the audio stem sample. As a further example, where the audio stem sample is an instrumental sample, e.g., a piano, the output audio 320 comprises instrumental audio that includes piano audio. As a further example, where the audio stem sample is a style sample, e.g., music in a particular style, the output audio 320 comprises audio with the same style as the audio stem sample.

In some examples, the machine-learning generative model 316 is further conditioned on additional input data 318, i.e., the additional input data 318 is input into the machine-learning generative model 316 in addition to the embedding 306. Such additional input data 318 may comprise, for example, a natural language description of one or more target properties of the output audio 320 (e.g., a prompt). For example, the additional input data 318 may comprise a set of lyrics to be included in the output audio 320. Alternatively or additionally, the additional input data 318 may comprise a set of instructions for the generative model, e.g., "Make me a rock song that sounds upbeat." In some examples, the natural language input can comprise input in the form of code and/or mark-up language.

In some examples the additional input data 318 may comprise one or more images.

In some examples, the method 300 is an iterative method. At each of a plurality of iterations, a section of the output audio 320 is generated based on a respective embedding 306 input into the generative model 316. In some examples, a time duration of each section of audio may be specified, e.g., in the additional input data. For example, the additional input data may specify that the first 16 seconds of audio should have the style of a first singer and the second 16 seconds of audio should have the style of a different second singer.

For example, a first section of the output audio 320 may be generated based on an embedding of an audio stem sample from a first singer and comprise vocals in the style of that singer. A second section of the output audio 320 may be generated based on an embedding of an audio stem sample from a second singer and comprise vocals in the style of the second singer. The first and second sections may be consecutive.

FIG. 4 shows an overview of an example method 400 for training a machine-learning model to generate embeddings of audio stem samples. A training example 422 comprising a first audio stem sample 422A and a second audio stem sample 424B is obtained from a training dataset of training examples. The first audio stem sample 422A and second audio stem sample 424B form a training pair. When the first audio stem sample 422A and second audio stem sample 424B originate from the same source, the training pair is described as a positive pair. When the first audio stem sample 422A and second audio stem sample 424B originate from different sources, the training pair is described as a negative pair. The first audio stem sample 422A and second audio stem sample 424B are processed by a machine-learning embedding model 416 to generate a first candidate embedding 424A and a second candidate embedding 424B respectively. The first candidate embedding 424A and the second candidate embedding 424B are compared using a contrastive objective function 426. Based on the comparison, updates to parameter values of the machine-learning embedding model 416 are determined.

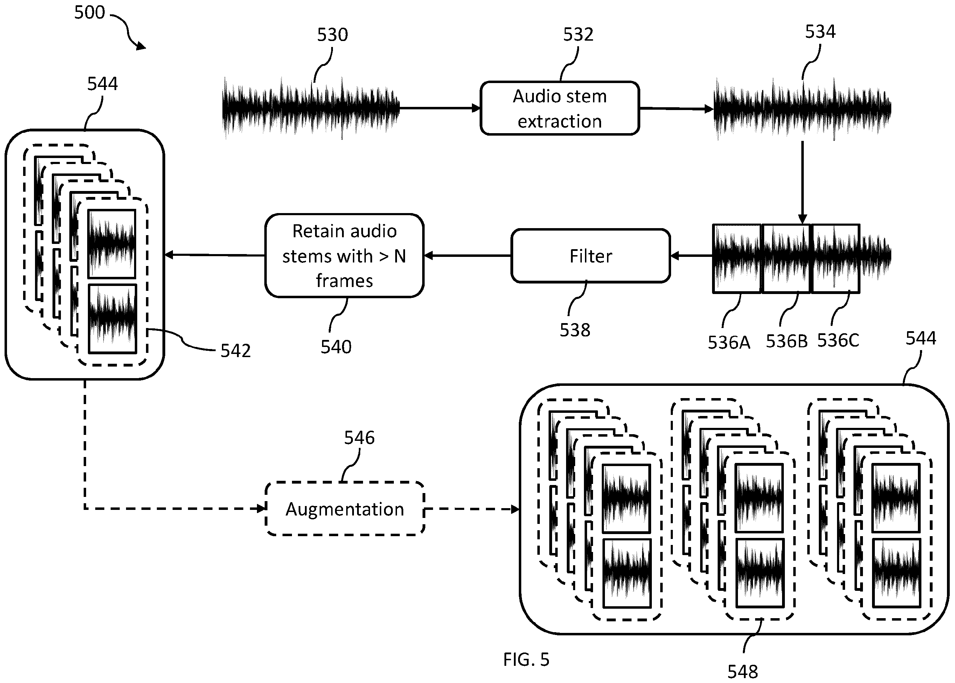

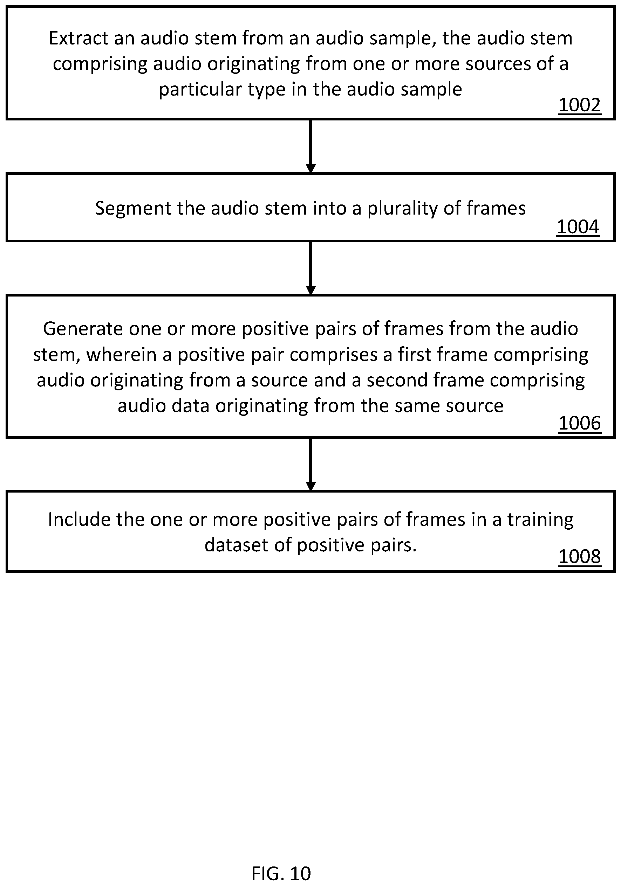

The training dataset comprises a plurality of training pairs of audio stem samples. The plurality of training pairs of audio stem samples comprises a plurality of positive training pairs (also referred to as "positive pairs") of audio stem samples, i.e., pairs of audio stem samples that originate from the same source, such as the same singer, same instrument, that have the same styles of music, or the like. The plurality of training pairs of audio stem samples further comprises a plurality of negative training pairs (also referred to as "negative pairs") of audio stem samples, i.e., pairs of audio stem samples that originate from the different sources, such as different singers, different instruments, that have different style, or the like. Example methods of generating the training dataset are described herein with respect to FIGs. 5 and 10.

The machine-learning embedding model 404 is, in some examples, a neural network model. The machine-learning embedding model 404 may comprise one or more self-attention layers, e.g., be a transformer model. The machine-learning embedding model 404 may comprise one or more convolutional layers. The machine-learning embedding model 404 may comprise one or more fully connected layers. In some examples, the machine-learning embedding model 404 has an architecture that is based on a vision transformer (ViT) model.

For each of one or more training pairs in a training batch/minibatch, the machine-learning model processes a first audio stem sample 422A of the training pair to generate a first (candidate) embedding 424A, and processes a second audio stem sample 422B of the training pair to generate a second (candidate) embedding 424B. Examples of processing an audio stem sample to generate a respective embedding are described herein in relation to FIGs. 1 and 6.

The first embedding 424A and second embedding 424B are compared using an objective function 426 (also described herein as a "loss function"). The loss/objective function 426 provides a score for the first embedding 424A and second embedding 424B that rewards respective first 424A and second 424B embeddings from positive pairs being close to each other in embedding space (i.e., penalizes them from being further part in embedding space), and penalizes respective first 424A and second 424B embeddings from negative pairs being close to each other in embedding space (i.e., rewards them from being further part in embedding space). Examples of such loss functions include contrastive loss functions and/or triplet loss functions.

Parameter updates for the machine-learning embedding model are determined from the values of the objective function 426. An optimization routine, such as stochastic gradient descent, may be applied to the objective function 426 to determine the parameter updates, with a goal of minimizing or maximizing the objective function 426 (depending on how the objective function 426 is constructed). In some examples, multiple objective function 426 values, e.g., the objective function values 426 from a plurality of training examples that form a batch/minibatch, are combined before applying the optimization routine, e.g., by averaging.

The training method 400 may be iterated until one or more termination conditions are satisfied. The one or more termination conditions may comprise, for example, a threshold number of iterations, a threshold performance being reached on a test dataset, and/or a threshold number of training epochs.

FIG. 5 shows an overview of an example method 500 for generating a training dataset for training a machine-learning model to generate embeddings of audio stem samples. For each of a plurality of audio samples 530, audio stem extraction 532 is performed to extract a particular audio stem 534 from the audio sample. The extracted audio stem 534 is divided into a plurality of audio stem frames 536A-C (also referred to as audio stem samples), e.g., frames of a predefined length. The frames 536A-C are, in some examples, filtered 538 to remove frames that do not contain enough audio data to be useful as training examples, e.g., have an energy level below a threshold value. If an audio stem 534 has a number of remaining frames below a threshold value, it is discarded 540. Positive pairs 542 of training data formed from the remaining frames of audio data from an audio stem 534 and incorporated into a training dataset 544. Negative pairs of training data (not shown) can be formed from frames of different audio stems 534 and incorporated into the training dataset 544.

In some examples, the method 500 further comprises augmenting 546 the training dataset 544. E.g., applying one or more data augmentation operations to generate further pairs of training data 548 (i.e., augmented data pairs). The augmented data pairs are incorporated into the training dataset 544.

An audio sample 530 comprises one or more (e.g., a plurality) of audio stems, each corresponding to audio that originates from a different one or more sources, e.g., one or more vocal stems, each corresponding to a respective one or more speakers/singers, one or more instrumental stems, one or more instruments or instrument types, an/or the like. Each audio sample 530 may have a predefined length, T, e.g., the audio samples all have the same length. The predefined length may lie in the range 1 minute to 5 minutes, e.g., 3 minutes. The audio samples 320 are, in some examples, music samples.

An audio stem extraction process 532 is applied to the audio sample 530 to extract an audio stem 534 form the audio sample 530. The audio stem extraction process 532 is, in some examples, specialized in extracting audio stems 534 of a particular type of audio stem from audio samples 530, e.g., vocal audio stems, or instrumental audio stems of a particular type. Examples of audio stem extract processes 532 include, but are not limited to, MDX-based vocal extraction and/or AI-based stem extraction methods.

In some examples, a plurality of audio stems 534 can be generated from each audio sample 530, e.g., a separate audio stem for each speaker in the audio and/or a separate audio stem for each instrument/instrument type in the audio sample 530. Multiple audio extraction processes may be applied to generate the plurality of audio stems 534. The resulting audio stems can be used to train multiple machine-learning encoder models, e.g., one for each type of audio stem type. Alternatively or additionally, the resulting audio stems can be used to train a single general machine-learning embedding model.

Extracted audio stems 534 are divided into a plurality of audio frames 536A-C. Each audio frame 536A-C has a predefined length, *t*, e.g., each frame has the same length. The frame length may lie in the range 3 seconds to 30 seconds, e.g., 4 seconds.

A filter 538 is applied to the set of audio frames 536A-C derived from an audio stem 534 to remove frames that do not contain enough audio data to be useful for training the machine-learning embedding model. Any filtering technique 538 known in the art may be applied. For example, the frames 536A-C can be filtered using an RMS energy-based filter, e.g., frames 536A-C that have an RMS energy below a threshold value are discarded, and 536A-C that have a RMS energy above a threshold value are retained.

A further filter 540 is applied to remove audio stem samples from audio stems that have fewer than a threshold number, *N*, of frames, i.e., only audio stem samples from audio stems that have greater than (or equal to) a threshold number of frames are retained. The threshold number, *N* may be between two and ten, e.g., five.

Positive pairs 542 of training data are generated from pairs of audio frames 536A-C taken from the same audio stem 534. Such positive pairs correspond to audio data from the same source in the audio sample 530. For example, the positive pairs correspond to audio stem samples of the same singer/speaker, or the same instrument/instrument type taken from different parts of the audio sample 530. The positive pairs 542 are incorporated into a training dataset 544.

Negative pairs of training data are generated from pairs of audio frames taken from different audio stems, i.e., the negative pairs correspond to audio data from different sources in an audio sample 530 and/or from different sources in different audio samples 530. For example, a negative pair can correspond to an audio stem sample of a first singer taken from a first audio sample 530, and a second singer taken from a second audio sample 530. The negative pairs are incorporated into a training dataset 544.

In some examples, the training dataset undergoes data augmentation 546 to generate further training pairs. The data augmentation can include, for example, one or more of: tempo augmentation; pitch augmentation; microphone augmentation; noise augmentation; reverse audio augmentation; and/or the like. The further training pairs are incorporated into the (augmented) training dataset 544.

The training dataset 544 can be used to train a machine-learning embedding model for embedding audio stem samples, for example as described in relation to FIG. 4.

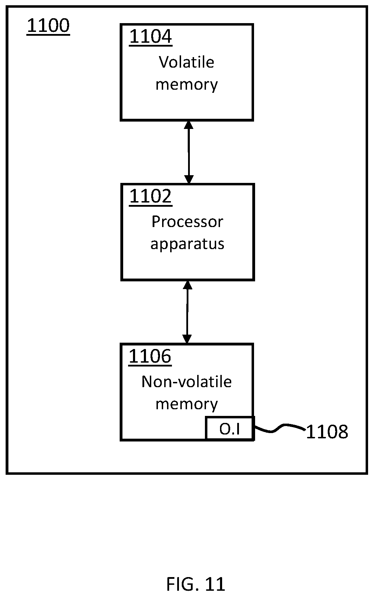

FIG. 6 shows a flow diagram of an example method of generating embeddings of audio stem samples using a machine-learning model. The method 600 may be performed by one or more computing systems/apparatus operating in one or more locations, such as the computing systems/apparatus described in relation to FIG. 11. For convenience, the method 600 is described as being performed by a system.

At operation 602, the system obtains an audio stem sample. The audio stem sample comprises a sample of an audio stem, e.g., audio originating from one or more sources of a particular type or types. The audio stem sample may be a sample of vocal audio stem from a set of audio data (e.g., musical audio data, such as a song). The audio stem sample may have a predefined duration, e.g., the predefined time may be between three and thirty seconds, such as four seconds.

The system may select the audio stem sample from a set of audio stem samples based on a user input, e.g., a user may select a vocal identity through a graphical user interface, and, in response, the system retrieves the corresponding audio stem sample from a set of stored audio stem samples.

Alternatively, the system may extract the audio stem sample from a set of audio data, e.g., a set of audio data input/uploaded by a user. The system can use an audio extraction process, such as MDX-based vocal extraction, to extract an audio stem from the input audio data, e.g., a vocal audio stem. The system then generates a sample of the audio stem of the predefined lengthy, e.g., by cropping the audio stem, either automatically or based on user input.

At operation 604, the system generates an embedding of the audio stem sample in embedding space using a machine-learning embedding model. The embedding is, in some examples, a vector in an *N*-dimensional embedding space.

The machine-learning embedding model may be a neural network model. The machine-learning embedding model may comprise one or more self-attention layers (e.g., be a transformer model). The machine-learning embedding model may comprise one or more convolutional layers (e.g., be a convolutional neural network, CNN). The machine-learning embedding model may comprise one or more fully connected layers.

The machine-learning embedding model has, in some examples, been trained based on a contrastive loss function, for example as described in relation to FIGs. 4 and/or 9. The machine-learning embedding model has, in some examples, been trained using training data generated as described in relation to FIGs. 5 and/or 10.

The embedding of the audio stem sample can be used for one or more downstream audio processing tasks. For example, the embedding of the audio stem sample can be used to determine if a speaker in an audio sample corresponds to a target speaker, as described in relation to FIGs. 2 and 7. Alternatively or additionally, the embedding of the audio stem sample can be used to

FIG. 7 shows a flow diagram of an example method of verifying speakers in an audio sample based on embeddings of audio stem samples. The method 700 may be performed by one or more computing systems/apparatus operating in one or more locations, such as the computing systems/apparatus described in relation to FIG. 11. For convenience, the method 700 is described as being performed by a system.

At operation 702, the system obtains an embedding of an audio stem sample in an embedding space. The audio embedding of the audio sample may be obtained using any of the methods described herein.

At operation 704, the system compares the embedding of the vocal audio stem to an embedding of a reference vocal audio stem sample that includes a target speaker. The comparison may be based on a distance between the embedding of the vocal audio stem and the embedding of the reference vocal audio stem in embedding space.

At operation 706, the system determines that the audio stem sample corresponds to the target speaker based on the comparison. Determining that the audio stem sample corresponds to the target speaker is, in some examples, in response to determining that the distance in the embedding space between the embedding of the audio stem sample and the embedding of the reference audio stem sample is below a threshold value.

FIG. 8 shows a flow diagram of an example method of generating audio data based on an embedding of an audio stem samples. The method 800 may be performed by one or more computing systems/apparatus operating in one or more locations, such as the computing systems/apparatus described in relation to FIG. 11. For convenience, the method 800 is described as being performed by a system.

At operation 802, the system obtains an embedding of an audio stem sample in an embedding space.

At operation 804, the system inputs the embedding of the audio stem sample into a machine-learning generative model.

At operation 806, the system generates, using the machine-learning generative model and conditioned on the embedding of the audio stem sample, output audio data comprising an output audio stem. The output audio stem has one or more audio properties in common with the audio stem sample.

FIG. 9 shows a flow diagram of an example method of training a machine-learning model to generate embeddings of audio stem samples. The method 900 may be performed by one or more computing systems/apparatus operating in one or more locations, such as the computing systems/apparatus described in relation to FIG. 11. For convenience, the method 900 is described as being performed by a system.

At operation 902, the system generates, using a machine-learning embedding model and based on a first audio stem sample, a first embedding of the first audio stem sample in an embedding space. The first audio stem sample is taken from a training pair comprising the first audio stem sample and a second audio stem sample. The training pair may be a positive training pair, i.e., contains a pair of audio stem samples originating from the same audio stem. The training pair may be a negative training pair, i.e., contains a pair of audio stem samples originating from different audio stems.

At operation 904, the system generates, using the machine-learning embedding model and based on a second audio stem sample, a second embedding of the second audio stem sample in an embedding space. The second audio stem sample is taken from the same training pair as the first audio stem sample.

The first audio stem sample and second audio stem sample for a training example originate from one or more vocal sources, e.g., a singer. The first audio stem sample and second audio stem sample may have the same, predefined duration, e.g., between 3 and 30 seconds, e.g., 4 seconds.

The machine-learning embedding model may comprise one or more self-attention layers, e.g., be a transformer model.

At operation 906, the system compares the first embedding to the second embedding using an objective function. The objective function may be a contrastive objective function. The objective function may be a triplet loss function. If the first audio stem sample and the second audio stem sample originate from the same source (i.e. are from a positive training pair), the objective function penalizes a difference between the first embedding and the second embedding, i.e., rewards the first embedding and the second embedding being close in embedding space. If the first audio stem sample and the second audio stem sample originate from different sources (i.e., are a negative training pair), the contrastive objective function rewards a difference between the first embedding and the second embedding, i.e., penalizes the first embedding and the second embedding being close in embedding space.

Operations 902 to 906 are, in some examples, performed for each of one or more training pairs of training data, e.g., a batch or minibatch of training data, before proceeding to operation 908.

At operation 908, the system updates parameters of the machine-learning embedding model based on the comparisons of the first embeddings to the second embeddings. An optimization routine, such as stochastic gradient descent, may be applied to the objective function to determine the parameter updates.

Operations 902 to 908 are, in some examples, iterated over the training dataset. The method may be iterated until one or more threshold conditions are satisfied, e.g., a predefined number of training iterations/epochs and/or a threshold performance being reached on a test dataset.

Th method may further comprise generating the training dataset, as described in relation to FIGs. 5 and 10.

FIG. 10 shows a flow diagram of an example method of generating a training dataset for training a machine-learning model to generate embeddings of audio stem samples. The method 1000 may be performed by one or more computing systems/apparatus operating in one or more locations, such as the computing systems/apparatus described in relation to FIG. 11. For convenience, the method 1000 is described as being performed by a system.

At operation 1002, the system extracts an audio stem from an audio sample. The audio stem comprises audio originating from one or more sources of a particular type in the audio sample.

At operation 1004, the system segments the audio stem into a plurality of frames. Each of the plurality of frames may have the same, predefined length, *t. t* may lie in the range [3, 30] seconds, e.g., 4 seconds.

At operation 1006, the system generates one or more positive pairs of frames from the audio stem. A positive pair comprises a first frame from an audio stem comprising audio originating from a source and a second frame from the same audio stem (or, in some examples, a different audio stem) comprising audio data originating from the same source. For example, the one or more sources of a particular type in the audio sample are vocal sources, and the first audio frame and second audio frame of a positive pair comprise vocal data originating from the same person.

Generating the one or more positive pairs of frames from the audio stem may comprise filtering the plurality of frames in the audio stem based on respective energy levels of audio data in the plurality of frames in the audio stem to generate a filtered set of frames of the audio stem. Frames with an energy value (e.g., RMS energy) less than a threshold value may be discarded. The one or more positive pairs of frames in the audio stem are generated from the filtered set of frames of the audio stem, e.g., only from frames with an energy above the threshold value.

The system may further generate one or more negative pairs. A negative pair comprises a first frame from an audio stem comprising audio originating from a source and a second frame originating from a different same source, for example from a different audio sample.

At operation 1008, the system includes the one or more positive pairs of frames in a training dataset. The one or more negative pairs of frames may also be included in the training dataset.

In some examples, the system applies a data augmentation routine to the training dataset to generate augmented training pairs. Augmenting the one or more positive pairs of frames may comprise using one or more audio transformations to generate the one or more augmented pairs of frames from the training pairs. The one or more augmented pairs of frames in incorporated into the training dataset of positive pairs. In some examples, data augmentation is applied to only the positive training pairs. In some examples, data augmentation is applied to both the positive training pairs and the negative training pairs. The one or more audio transformations may comprise one or more of: tempo augmentation; pitch augmentation; noise augmentation; and/or reverse audio augmentation.

FIG. 11 shows a schematic example of a system/apparatus 1100 for performing any of the methods described herein. The system/apparatus shown is an example of a computing device. It will be appreciated by the skilled person that other types of computing devices/systems may alternatively be used to implement the methods described herein, such as a distributed computing system.

The apparatus (or system) 1100 comprises one or more processors 1102. The one or more processors control operation of other components of the system/apparatus 1100. The one or more processors 1102 may, for example, comprise a general-purpose processor. The one or more processors 1102 may be a single core device or a multiple core device. The one or more processors 1102 may comprise a Central Processing Unit (CPU) or a graphical processing unit (GPU). Alternatively, the one or more processors 1102 may comprise specialized processing hardware, for instance a RISC processor or programmable hardware with embedded firmware. Multiple processors may be included.

The system/apparatus comprises a working or volatile memory 1104. The one or more processors may access the volatile memory 1104 in order to process data and may control the storage of data in memory. The volatile memory 1104 may comprise RAM of any type, for example, Static RAM (SRAM), Dynamic RAM (DRAM), or it may comprise Flash memory, such as an SD-Card.

The system/apparatus comprises a non-volatile memory 1106. The non-volatile memory 1106 stores a set of operation instructions 1108 for controlling the operation of the processors 1102 in the form of computer readable instructions. The non-volatile memory 1106 may be a memory of any kind such as a Read Only Memory (ROM), a Flash memory or a magnetic drive memory.

The one or more processors 1102 are configured to execute operating instructions 1108 to cause the system/apparatus to perform any of the methods described herein. The operating instructions 1108 may comprise code (i.e. drivers) relating to the hardware components of the system/apparatus 1100, as well as code relating to the basic operation of the system/apparatus 1100. Generally speaking, the one or more processors 1102 execute one or more instructions of the operating instructions 1108, which are stored permanently or semi-permanently in the non-volatile memory 1106, using the volatile memory 1104 to store temporarily data generated during execution of said operating instructions 1108.

In this specification, the term "configured" is used in relation to computing systems and environments, as well as computer program components. A computing system or environment is considered "configured" to perform specific operations or actions when it possesses the necessary software, firmware, hardware, or a combination thereof, enabling it to carry out those operations or actions during operation. For instance, configuring a system might involve installing a software library with specific algorithms, updating firmware with new instructions for handling data, or adding a hardware component for enhanced processing capabilities. Similarly, one or more computer programs are "configured" to perform particular operations or actions when they contain instructions that, upon execution by a computing device or hardware, cause the device to perform those intended operations or actions.

The embodiments and functional operations described in this specification can be implemented in various forms, including digital electronic circuitry, software, firmware, computer hardware (encompassing the disclosed structures and their structural equivalents), or any combination thereof. The subject matter can be realized as one or more computer programs, essentially modules of computer program instructions encoded on a tangible non-transitory storage medium for execution by or to control the operation of a computing device or hardware. The storage medium can be a storage device such as a hard drive or solid-state drive (SSD), a storage medium, a random or serial access memory device, or a combination of these. Additionally or alternatively, the program instructions can be encoded on a transmitted signal, such as a machine-generated electrical, optical, or electromagnetic signal, designed to carry information for transmission to a receiving device or system for execution by a computing device or hardware. Furthermore, implementations may leverage emerging technologies like quantum computing or neuromorphic computing for specific applications, and may be deployed in distributed or cloud-based environments where components reside on different machines or within a cloud infrastructure.

The term "computing device or hardware" refers to the physical components involved in data processing and encompasses all types of devices and machines used for this purpose. Examples include processors or processing units, computers, multiple processors or computers working together, graphics processing units (GPUs), tensor processing units (TPUs), and specialized processing hardware such as field-programmable gate arrays (FPGAs) or application-specific integrated circuits (ASICs). In addition to hardware, a computing device or hardware may also include code that creates an execution environment for computer programs. This code can take the form of processor firmware, a protocol stack, a database management system, an operating system, or a combination of these elements. Embodiments may particularly benefit from utilizing the parallel processing capabilities of GPUs, in a General-Purpose computing on Graphics Processing Units (GPGPU) context, where code specifically designed for GPU execution, often called kernels or shaders, is employed. Similarly, TPUs excel at running optimized tensor operations crucial for many machine learning algorithms. By leveraging these accelerators and their specialized programming models, the system can achieve significant speedups and efficiency gains for tasks involving artificial intelligence and machine learning, particularly in areas such as computer vision, natural language processing, and robotics.

A computer program, also referred to as software, an application, a module, a script, code, or simply a program, can be written in any programming language, including compiled or interpreted languages, and declarative or procedural languages. It can be deployed in various forms, such as a standalone program, a module, a component, a subroutine, or any other unit suitable for use within a computing environment. A program may or may not correspond to a single file in a file system and can be stored in various ways. This includes being embedded within a file containing other programs or data (e.g., scripts within a markup language document), residing in a dedicated file, or distributed across multiple coordinated files (e.g., files storing modules, subprograms, or code segments). A computer program can be executed on a single computer or across multiple computers, whether located at a single site or distributed across multiple sites and interconnected through a data communication network. The specific implementation of the computer programs may involve a combination of traditional programming languages and specialized languages or libraries designed for GPGPU programming or TPU utilization, depending on the chosen hardware platform and desired performance characteristics.

In this specification, the term "engine" broadly refers to a software-based system, subsystem, or process designed to perform one or more specific functions. An engine is typically implemented as one or more software modules or components installed on one or more computers, which can be located at a single site or distributed across multiple locations. In some instances, one or more dedicated computers may be used for a particular engine, while in other cases, multiple engines may operate concurrently on the same one or more computers. Examples of engine functions within the context of AI and machine learning could include data pre-processing and cleaning, feature engineering and extraction, model training and optimization, inference and prediction generation, and post-processing of results. The specific design and implementation of engines will depend on the overall architecture and the distribution of computational tasks across various hardware components, including CPUs, GPUs, TPUs, and other specialized processors.

The processes and logic flows described in this specification can be executed by one or more programmable computers running one or more computer programs to perform functions by operating on input data and generating output. Additionally, graphics processing units (GPUs) and tensor processing units (TPUs) can be utilized to enable concurrent execution of aspects of these processes and logic flows, significantly accelerating performance. This approach offers significant advantages for computationally intensive tasks often found in AI and machine learning applications, such as matrix multiplications, convolutions, and other operations that exhibit a high degree of parallelism. By leveraging the parallel processing capabilities of GPUs and TPUs, significant speedups and efficiency gains compared to relying solely on CPUs can be achieved. Alternatively or in combination with programmable computers and specialized processors, these processes and logic flows can also be implemented using specialized processing hardware, such as field-programmable gate arrays (FPGAs) or application-specific integrated circuits (ASICs), for even greater performance or energy efficiency in specific use cases.

Computers capable of executing a computer program can be based on general-purpose microprocessors, special-purpose microprocessors, or a combination of both. They can also utilize any other type of central processing unit (CPU). Additionally, graphics processing units (GPUs), tensor processing units (TPUs), and other machine learning accelerators can be employed to enhance performance, particularly for tasks involving artificial intelligence and machine learning. These accelerators often work in conjunction with CPUs, handling specialized computations while the CPU manages overall system operations and other tasks. Typically, a CPU receives instructions and data from read-only memory (ROM), random access memory (RAM), or both. The essential elements of a computer include a CPU for executing instructions and one or more memory devices for storing instructions and data. The specific configuration of processing units and memory will depend on factors like the complexity of the AI model, the volume of data being processed, and the desired performance and latency requirements. Embodiments can be implemented on a wide range of computing platforms, from small embedded devices with limited resources to large-scale data center systems with high-performance computing capabilities. The system may include storage devices like hard drives, SSDs, or flash memory for persistent data storage.

Computer-readable media suitable for storing computer program instructions and data encompass all forms of non-volatile memory, media, and memory devices. Examples include semiconductor memory devices such as read-only memory (ROM), solid-state drives (SSDs), and flash memory devices; hard disk drives (HDDs); optical media; and optical discs such as CDs, DVDs, and Blu-ray discs. The specific type of computer-readable media used will depend on factors such as the size of the data, access speed requirements, cost considerations, and the desired level of portability or permanence.

To facilitate user interaction, embodiments of the subject matter described in this specification can be implemented on a computing device equipped with a display device, such as a liquid crystal display (LCD) or an organic light-emitting diode (OLED) display, for presenting information to the user. Input can be provided by the user through various means, including a keyboard), touchscreens, voice commands, gesture recognition, or other input modalities depending on the specific device and application. Additional input methods can include acoustic, speech, or tactile input, while feedback to the user can take the form of visual, auditory, or tactile feedback. Furthermore, computers can interact with users by exchanging documents with a user's device or application. This can involve sending web content or data in response to requests or sending and receiving text messages or other forms of messages through mobile devices or messaging platforms. The selection of input and output modalities will depend on the specific application and the desired form of user interaction.

Machine learning models can be implemented and deployed using machine learning frameworks, such as TensorFlow or JAX. These frameworks offer comprehensive tools and libraries that facilitate the development, training, and deployment of machine learning models.

Embodiments of the subject matter described in this specification can be implemented within a computing system comprising one or more components, depending on the specific application and requirements. These may include a back-end component, such as a back-end server or cloud-based infrastructure; an optional middleware component, such as a middleware server or application programming interface (API), to facilitate communication and data exchange; and a front-end component, such as a client device with a user interface, a web browser, or an app, through which a user can interact with the implemented subject matter. For instance, the described functionality could be implemented solely on a client device (e.g., for on-device machine learning) or deployed as a combination of front-end and back-end components for more complex applications. These components, when present, can be interconnected using any form or medium of digital data communication, such as a communication network like a local area network (LAN) or a wide area network (WAN) including the Internet. The specific system architecture and choice of components will depend on factors such as the scale of the application, the need for real-time processing, data security requirements, and the desired user experience.

The computing system can include clients and servers that may be geographically separated and interact through a communication network. The specific type of network, such as a local area network (LAN), a wide area network (WAN), or the Internet, will depend on the reach and scale of the application. The client-server relationship is established through computer programs running on the respective computers and designed to communicate with each other using appropriate protocols. These protocols may include HTTP, TCP/IP, or other specialized protocols depending on the nature of the data being exchanged and the security requirements of the system. In certain embodiments, a server transmits data or instructions to a user's device, such as a computer, smartphone, or tablet, acting as a client. The client device can then process the received information, display results to the user, and potentially send data or feedback back to the server for further processing or storage. This allows for dynamic interactions between the user and the system, enabling a wide range of applications and functionalities.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially be claimed as such, one or more features from a claimed combination can in some cases be excised from the combination, and the claimed combination may be directed to a sub-combination or variation of a sub-combination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer implemented method comprising:
obtaining an audio stem sample, wherein the audio stem sample comprises audio originating from one or more sources of a particular type in an audio sample; and
generating, using a machine-learning embedding model, an embedding of the audio stem sample in an embedding space.

2. The method of claim 1, wherein the one or more sources of a particular type in the audio sample are vocal sources.

3. The method of claim 2, wherein the method further comprises:
comparing the embedding of the vocal audio stem to an embedding of a reference vocal audio stem sample that includes one or more target speakers; and
determining that the audio stem sample corresponds to one or more of the target speakers based on the comparison.

4. The method of claim 3, wherein comparing the embedding of the vocal audio stem to the embedding of a reference vocal audio stem sample that includes one or more target speakers comprises:
determining a distance in the embedding space between the embedding of the audio stem sample and an embedding of a reference audio stem sample; and
wherein determining that the audio stem sample corresponds to one or more of the target speaker based on the comparison comprises:
determining that the distance in the embedding space between the embedding of the audio stem sample and the embedding of the reference audio stem sample is below a threshold value.

5. The method of any of claims 1 to 2, further comprising:
inputting the embedding of the audio stem sample into a machine-learning generative model; and
generating, by the machine-learning generative model and conditioned on the embedding of the audio stem sample, output audio data comprising an output audio stem, wherein the output audio stem has one or more audio properties in common with the audio stem sample.

6. The method of claim 5, further comprising:
inputting a natural language input into the machine-learning generative model, the natural language input describing one or more target properties of the output audio data,
wherein generating, by the machine-learning generative model, the output audio data comprising an output audio stem is further conditioned on the natural language input.

7. The method of any of claims 5 or 6, wherein generating, by the machine-learning generative model, output audio data comprising an output audio stem comprises, at each of a plurality of iterations:
inputting an embedding of an audio stem sample for the iteration into the machine-learning generative model, wherein the audio stem sample for the iteration comprises the audio stem sample and/or a further audio stem sample; and
generating, by the machine-learning generative model and conditioned on the embedding of the audio stem sample for the iteration, a section of the output audio data, wherein the section of output audio data for an iteration is temporally subsequent to a section of output audio data of the previous iteration.

8. The method of any of claims 5 to 7, wherein the output audio data comprises a music sample and wherein the output audio stem is a vocal audio stem.

9. A computer implemented method comprising:
obtaining an embedding of an audio stem sample, wherein the audio stem sample comprises audio originating from one or more sources of a particular type in an audio sample
inputting the embedding of the audio stem sample into a machine-learning generative model; and
generating, by the machine-learning generative model and conditioned on the embedding of the audio stem sample, output audio data comprising an output audio stem, wherein the output audio stem has one or more audio properties in common with the audio stem sample.

10. A computer implemented method, comprising:
for a plurality of training examples, each training example comprising a first audio stem sample and a second audio stem sample:
generating, using the machine-learning embedding model and based on the first audio stem sample, a first embedding of the first audio stem sample in an embedding space;
generating, using the machine-learning embedding model and based on the second audio stem sample, a second embedding of the second audio stem sample in an embedding space; and
comparing the first embedding to the second embedding using a contrastive objective function, wherein:
if the first audio stem sample and the second audio stem sample originate from the same source, the contrastive objective function penalizes a difference between the first embedding and the second embedding; and
if the first audio stem sample and the second audio stem sample originate from different sources, the contrastive objective function rewards a difference between the first embedding and the second embedding; and
updating parameters of the machine-learning embedding model based on the comparisons of the first embeddings to the second embeddings.

11. The method of claim 10, further comprising generating a training dataset comprising the training examples, wherein generating the training dataset comprises:
extracting an audio stem from the audio sample, the audio stem comprising audio originating from one or more sources of a particular type in the audio sample;
segmenting the audio stem into a plurality of frames;
generating one or more positive pairs of frames from the audio stem, wherein a positive pair comprises a first frame comprising audio originating from a source and a second frame comprising audio data originating from the same source; and
including the one or more positive pairs of frames in a training dataset of positive pairs.

12. A computer implemented method for generating a training dataset for training a machine-learning embedding model to generate embeddings of audio stem samples, the method comprising, for each of one or more audio samples:
extracting an audio stem from the audio sample, the audio stem comprising audio originating from one or more sources of a particular type in the audio sample;
segmenting the audio stem into a plurality of frames;
generating one or more positive pairs of frames from the audio stem, wherein a positive pair comprises a first frame comprising audio originating from a source and a second frame comprising audio data originating from the same source; and
including the one or more positive pairs of frames in a training dataset of positive pairs.

13. The method of claim 12, wherein the one or more sources of a particular type in the audio sample are vocal sources, and wherein the first audio frame and second audio frame of a positive pair comprise vocal data originating from the same person.

14. A computer program product comprising computer readable instructions that, when executed by a computer, cause the computer to perform operations comprising the method of any preceding claim.

15. A system comprising one or more processors and a memory, the memory storing computer readable instructions that, when executed by the one or more processors, cause the system to perform operations comprising the method of any of claims 1 to 13.
